# EUROPÄISCHE PATENTSCHRIFT

(11) **EP 2 260 635 B1**
(45) Veröffentlichungstag und Bekanntmachung des Hinweises auf die Patenterteilung: **13.11.2013**
(21) Anmeldenummer: 08734911.4
(22) Anmeldetag: 31.03.2008
(51) Int. Cl.: H04L 29/08

(54) **VERFAHREN UND ADRESSSERVER ZUR STEUERUNG EINES KOMMUNIKATIONSENDGERÄTES MITTELS EINES DATENVERARBEITUNGSGERÄTES**
METHOD AND ADDRESS SERVER FOR CONTROLLING A COMMUNICATION TERMINAL BY MEANS OF A DATA PROCESSING DEVICE
PROCÉDÉ ET SERVEUR D'ADRESSES POUR COMMANDER UN TERMINAL DE COMMUNICATION AU MOYEN D'UN APPAREIL DE TRAITEMENT DE DONNÉES

(43) Veröffentlichungstag der Anmeldung: 15.12.2010
(73) Patentinhaber: Gigaset Communications GmbH, 81379 München (DE)
(72) Erfinder: LENFORT, Christoph, 46399 Bocholt (DE); MÖSKER, Volker, 46419 Isselburg (DE); SCHMITZ, Georg, 46414 Rhede (DE); SEEWALDT, Richard, 46397 Bocholt (DE); WIENAND, JÖRG, 46399 Bocholt (DE)
(74) Vertreter: Michalski Hüttermann & Partner Patentanwälte
(86) Internationale Anmeldenummer: PCT/EP2008/002556
(87) Internationale Veröffentlichungsnummer: WO 2009/121376

(56) Entgegenhaltungen:
- EP-A- 0 836 295
- EP-A- 1 545 087
- US-B1- 6 628 644
- BROCKBANK R ET AL: "CLICK DIAL WEB-ENABLED CTI" BRITISH TELECOMMUNICATIONS ENGINEERING, BRITISH TELECOMMUNICATIONS ENGINEERING. LONDON, GB, Bd. 18, Nr. 1, 1. April 1999 (1999-04-01), Seiten 18-24, XP000829903 ISSN: 0262-401X

## Beschreibung

Die Erfindung betrifft ein Verfahren zur Steuerung eines Kommunikationsendgerätes gemäß dem Patentanspruch 1, einen Adressserver für eine Kommunikationsanordnung mit einem Datenverarbeitungsgerät gemäß dem Patentanspruch 13, und eine Kommunikationsanordnung gemäß dem Patentanspruch 16.

Die Steuerung von Telefonen und anderen Kommunikationsendgeräten mittels eines Computers oder eines anderen Datenverarbeitungsgerätes wird in der Literatur zumeist als CTI (Computer Telephony Integration) bezeichnet. Dabei wird zwischen sog. First-Party-Anordnungen und Third-Party-Anordnungen unterschieden. Bei den erstgenannten First-Party-Anordnungen ist das Datenverarbeitungsgerät direkt mit einer Computerschnittstelle (serielle Schnittstelle, USB-Schnittstelle) des Kommunikationsendgerätes verbunden. Dabei kann mit einer Anwendung, die auf dem Computer installiert ist und dort abläuft, nur dasjenige Kommunikationsendgerät gesteuert werden, welches über die Computerschnittstelle mit diesem Datenverarbeitungsgerät verbunden ist. Mit solchen Anordnungen werden meist Einzelplatzlösungen für Wahlhilfe-Applikationen realisiert, wobei beispielsweise aus einem Computer-gestützten Fernsprechverzeichnis heraus per "Mausklick" eine Rufnummer gewählt werden kann, wobei dann über die Computerschnittstelle ein diesbezüglicher Wählbefehl zusammen mit der zu wählenden Rufnummerninformation an das Kommunikationsendgerät übertragen und dort ausgewertet wird.

Da solche First-Party-Anordnungen mit dem Nachteil behaftet sind, dass für jeden Arbeitsplatz die Datenverbindung zwischen dem jeweiligen Datenverarbeitungsgerät (z.B. PC) und dem Kommunikationsendgerät (z.B. Telefon) separat vorgesehen werden muss und überdies eine flexible Zuordnung zwischen Datenverarbeitungsgeräten und Kommunikationsendgeräten nicht möglich ist, werden bevorzugt in mittleren und größeren Unternehmen und ähnlich umfangreichen Kommunikationsnetzen die Third-Party-Anordnung bevorzugt, bei denen der Datenaustausch nicht zwischen dem Datenverarbeitungsgerät und dem Kommunikationsendgerät direkt erfolgt, sondern zwischen dem Datenverarbeitungsgerät und einem Kommunikationsserver (z.B. private Nebenstellenanlage), an der das Kommunikationsendgerät angeschlossen ist. Dabei macht man sich zunutze, dass die üblichen Datenverarbeitungsgeräte (PC's o.ä.) ohnehin an einem Datennetzwerk (z.B. LAN, Local Area Network) angeschlossen sind, so dass für die Hardware lediglich der Kommunikationsserver (Nebenstellenanlage) an das Datennetzwerk angeschlossen werden muss.

Ein Nachteil dieser Lösung besteht beispielsweise darin, dass sich in den modernen Voice-over-IP-Kommunikationsnetzwerken (VoIP) die Zuordnung zwischen den einzelnen Kommunikationsendgeräten zu einer Mehrzahl möglicher Kommunikationsserver (im Rahmen dieser Technologie oft auch als H.323-Gatekeeper oder SIP-Proxy genannt) häufig ("dynamisch") ändern kann. Weitere Schwierigkeiten treten auf, wenn anstelle einer Wahlhilfe-Anwendung oder allgemein einer fest installierten CTI-Anwendung, die als Rufnummernspeicher eine eigene Datenbank oder einen Directory-Server verwenden, WEB-basierte Telfonbuch-Anwendungen verwendet werden, die keine direkte Verbindung zum Kommunikationsserver aufweisen. Falls sich also beispielsweise ein Benutzer einer Internet-Suchmaschine bedient, um die Rufnummer eines gewünschten Gesprächspartners zu ermitteln, ist er in aller Regel gezwungen, diese Rufnummer manuell an seinem Telefon einzugeben. Der zur Ermittlung und Anzeige der Rufnummer regelmäßig genutzte "Browser" ist in der Regel nicht in der Lage, eine direkte Datenverbindung zum Kommunikationsendgerät oder zum Kommunikationsserver aufzubauen. Dasselbe gilt für die Datenquelle, also diejenige "Web-Site", welche die gesuchte Rufnummerninformation zur Verfügung stellt. Das liegt unter anderem daran, dass private, "lokale" Netzwerke, an denen also beispielsweise auch die Kommunikationsendgeräte und Kommunikationsserver angeschlossen sind, regelmäßig mittels eines Routers mit dem Internet verbunden sind, wobei der Router sowohl eine Firewall als auch eine Adressumsetzungs-Einrichtung ("NAT-Engine"; NAT = Network Address Translation) aufweist. Somit ist der Server, welcher die gesuchte Rufnummerninformation bereitstellt (im Folgenden "Adressserver" genannt) nicht in der Lage, Rufnummerninformationen und Wählbefehle und andere Befehle direkt an das Kommunikationsendgerät oder den Kommunikationsserver zu übertragen. Eine Abhilfe könnte entweder dadurch geschaffen werden, dass der Nutzer an seinem Router eine sog. "Portweiterschaltung" aktiviert, oder dass das Kommunikationsendgerät zu jedem möglichen Adressserver eine Verbindung unterhält und dabei im Wege eines "Polling-Verfahrens" in relativ kurzen Zeitabständen wiederholt überprüft, ob ein wählbefehl o.ä. abgearbeitet werden soll. Während die erstgenannte Alternative allein schon aus Sicherheitsgründen ("Loch" in der Firewall) oft verworfen wird, führt die zweitgenannte Alternative zu einer meist unerwünscht hohen Netzlast.

Der Artikel: Brockbank, R. et al.:"Click Dial web-enabled CTI", British Telecommunications Engineering; London GB, Bd. 18, Nr. 1, 1. April 1999, Seiten 18 - 24 beschreibt ein Verfahren zur Steuerung eines Telefons mittels eines Computers, wobei ein Befehl von dem Computer zu einer dem Telefon zugeordneten Vermittlungseinrichtung einer entsprechenden Telefonanlage (PBX) übermittelt wird, wozu in einem ersten Schritt im Rahmen einer Registrierung u.a. auch eine dem Telefon zugeordnete Adresse an einen "ClickDialServer" als Adressserver übermittelt wird und in einem zweiten Schritt eine Abfragenachricht von dem Computer an diesen "ClickDialServer" übermittelt wird, auf die in einem dritten Schritt von dem "ClickDialServer" als Antwortnachricht zumindest eine URL als Link an den Computer übermittelt wird.

Die US 6,628,644 B1 beschreibt ein weiteres Verfahren zur Steuerung eines Kommunikationsendgerätes mittels eines Datenverarbeitungsgerätes.

Es ist Aufgabe der vorliegenden Erfindung, unter Vermeidung der vorgenannten Nachteile eine CTI-Anordnung mit einem Kommunikationsendgerät innerhalb eines lokalen Datennetzwerkes und einem Adressserver außerhalb des lokalen Datennetzwerkes vorzuschlagen.

Die Aufgabe wird durch ein Verfahren gemäß dem unabhängigen Patentanspruch 1, durch einen Adressserver gemäß dem unabhängigen Patentanspruch 13 und durch eine Kommunikationsanordnung gemäß dem unabhängigen Patentanspruch 16 gelöst.

Es ist dabei ein zentrales Merkmal der erfindungsgemäßen Lösung, dass der Adressserver eine zu wählende Rufnummer oder einen anderen Befehl als ausführbaren Hyper-Link (im Folgenden kurz "Link" genannt) an das Datenverarbeitungsgerät des Benutzers übermittelt, wo dieser Link dargestellt wird und von dem Benutzer auf einfache Weise aktiviert (z.B. "angeklickt") werden kann. Das besondere daran ist, dass dieser Link mit der Adresse (IP-Adresse, URL o.ä.) des zu steuernden Kommunikationsendgerätes bzw., im Fall einer Steuerung von Kommunikationsverbindungen mittels eines Kommunikationsservers, mit der Adressinformation (IP-Adresse, URL) des Kommunikationsservers verknüpft ist. Dadurch wird bei Aufruf des Links eine Nachricht (z.B. Datenpaket) zu dem Kommunikationsendgerät bzw. zu dem Kommunikationsserver übermittelt, wobei ein "Anhang" des Links den auszuführenden Befehl umfasst, also beispielsweise einen Wählbefehl und die zu wählende Rufnummer o.ä..

Die Erfindung sieht dabei ein Verfahren zur Steuerung eines Kommunikationsendgerätes mittels eines Datenverarbeitungsgerätes vor, wobei ein Befehl von dem Datenverarbeitungsgerät zu dem Kommunikationsendgerät oder zu einem dem Kommunikationsendgerät zugeordneten Kommunikationsserver übermittelt wird. Dabei wird in einem ersten Schritt eine dem Kommunikationsendgerät zugeordnete Adresse an den Adressserver übertragen, in einem zweiten Schritt wird eine Abfragenachricht von dem Datenverarbeitungsgerät an einen Adressserver übermittelt, in einem dritten Schritt wird von dem Adressserver als Antwortnachricht auf die Abfragenachricht zumindest ein Link an das Datenverarbeitungsgerät übermittelt, wobei der zumindest eine Link als Zieladresse die dem Kommunikationsendgerät zugeordnete Adresse umfasst, und wobei der Link einen Befehlsteil umfasst. In einem vierten Schritt wird durch eine Aktivierung des Links zumindest der Befehlsteil an die dem Kommunikationsendgerät zugeordnete Adresse versendet, und schließlich wird in einem fünften Schritt der Befehlsteil ausgewertet und zur Steuerung des Kommunikationsendgerätes verwendet. Zur Identifizierung des zu steuernden Kommunikationsendgerätes übermittelt das Datenverarbeitungsgerät vor oder mit der Abfragenachricht entweder die dem Kommunikationsendgerät zugeordnete Adresse oder eine andere Information (beispielsweise einen Benutzernamen, Account, Useraccount, Kennung o.ä.) zu dem Adressserver. In letzterem Fall meldet sich vorteilhaft vorher das Kommunikationsendgerät mit dieser Information und seiner zugeordneten Adresse bei dem Adressserver an und stellt damit eine Zuordnung dieser Information mit der Adresse, die für die Generierung der Links benötigt wird, her. Durch das erfindungsgemäße Verfahren wird erreicht, dass die in der Antwortnachricht enthaltene Rufnummerninformation o.ä. und der ausführende Befehl nach der Art eines üblichen Hyper-Links von dem Adressserver an das Datenverarbeitungsgerät übermittelt werden kann, ohne dass zusätzliche Maßnahmen zur Öffnung einer Firewall o.ä. getroffen werden müssen. Ein weiterer Vorteil besteht darin, dass außer einem Browser-Programm keine weitere Software auf dem Datenverarbeitungsgerät installiert werden muss. Weiterhin braucht mit dieser Lösung der Adressserver nicht in Kenntnis von lokal genutzten IP-Adressen gesetzt werden; dies kann beispielsweise erreicht werden, wenn als Adresse eine URL, URI oder (IP-) Rufnummer verwendet wird.

Die Erfindung sieht weiterhin zur Lösung der Aufgabe einen Adressserver vor, der eine Web-Server-Applikation umfasst, welche zur Durchführung des vorgenannten Verfahrens eingerichtet ist. In der Hauptsache führt der Adressserver dabei ein Verfahren durch, bei dem eine vom Client (Datenverarbeitungsgerät) übermittelte Adressinformation eines Kommunikationsendgerätes bzw. eines Kommunikationsservers, eine Rufnummerninformation und eine Befehls-Syntax zu einem (oder einer Mehrzahl) Hyper-Link verarbeitet wird, wobei dieser Link wiederum an das Datenverarbeitungsgerät, beispielsweise im Rahmen einer web-Site oder eines Web-Frames, übermittelt wird. Damit werden die Rahmen des Verfahrens diskutierten Vorteile realisiert.

Außerdem sieht die Erfindung eine Kommunikationsanordnung vor. Alternativ kann statt des entsprechend eingerichteten Kommunikationsendgerätes dieser Anordnung ein Kommunikations-server derart eingerichtet sein, dass dieser mittels des aktivierten Hyperlinks gesteuert wird, wobei damit eine Einstellung oder Kommunikationsverbindung für ein diesem Kommunikationsserver zugeordnetes Kommunikationsendgerät beeinflusst wird.

Vorteilhafte Ausgestaltungen des erfindungsgemäßen Verfahrens sind in den abhängigen Patentansprüchen 2 bis 12 angegeben; vorteilhafte Ausgestaltungen des erfindungsgemäßen Adressservers sind in den abhängigen Patentansprüchen 14 und 15 angegeben. Die mit den vorteilhaften Ausgestaltungen des verfahrens verknüpften Merkmale und deren Vorteile gelten sinngemäß auch für den erfindungsgemäßen Adressserver bzw. das erfindungsgemäße Kommunikationsendgerät, und umgekehrt.

Es hat sich herausgestellt, dass das erfindungsgemäße Verfahren besonders vorteilhaft mit VoIP-Kommunikationsendgeräten eingesetzt werden kann, weil die hohe Mobilität bzw. Portabilität von VoIP-Kommunikationsendgeräten durch die dynamische Adressierung des Verfahrens besonders gut unterstützt wird. Dabei kann vorteilhaft als die dem Kommunikationsendgerät zugeordnete Adresse dessen Netzwerkadresse (IP-Adresse, IP-Portnummer, VoIP-Rufnummer oder URL/URI) verwendet werden. Andererseits kann als die dem Kommunikationsendgerät zugeordnete Adresse auch eine Netzwerkadresse des Kommunikationsservers, an dem das Kommunikationsendgerät angemeldet ist, verwendet werden, wobei die zugeordnete Adresse dann jedoch weiterhin ein Identifizierungsmerkmal für das zu steuernde Kommunikationsendgerät enthält.

Wie bereits erwähnt, wird vorteilhaft zur Anzeige und Verarbeitung des Links eine auf dem Datenverarbeitungsgerät ablaufende Browser-Software verwendet. Eine separate, proprietäre Client-Software ist dann nicht erforderlich.

Zur Abdeckung des zurzeit häufigsten Anwendungsfalles wird für den Befehlsteil vorteilhaft ein Wählbefehl und eine Rufnummer eines zu rufenden Kommunikationspartners verwendet.

Insbesondere für die heute gebräuchlichen VoIP-Kommunikationsanordnungen wird für die Übermittlung der Abfragenachricht und für die Übermittlung der Antwortnachricht jeweils das HTTP-Protokoll verwendet.

Besonders in den Fällen, in denen das Kommunikationsendgerät bzw. der Kommunikationsserver durch eine NAT-Instanz von dem öffentlichen Datennetzwerk (z.B. Internet) getrennt ist, wird als die Kommunikationsadresse vorteilhaft eine lokal gültige Netzwerkadresse des Kommunikationsendgerätes verwendet. In anderen Fällen, in denen das Kommunikationsendgerät bzw. der Kommunikationsserver bereits über eine global gültige Netzwerkadresse verfügt (beispielsweise bei GPRS-Mobiltelefonen) wird umgekehrt vorteilhaft bevorzugt die global gültige IP-Adresse bzw. Netzwerkadresse verwendet.

Die (meist lokal gültige) dem Kommunikationsendgerät zugeordnete Adresse kann vor dem zweiten Schritt separat zu dem Adressserver übermittelt werden. Das hat zum Vorteil, dass die spätere Abfragenachricht (z.B. Suchbefehl für eine Internet-Datenbank) sich auf die Übermittlung der Suchbegriffe beschränken kann und nicht die zur Erzeugung des Links notwendige Adresse des Kommunikationsendgerätes bzw. des Kommunikationsservers enthalten muss. Vorteilhaft wird dazu die Adresse einmalig zu Beginn einer Sitzung ("Session") in eine Eingabemaske, die durch die Browser-Software dargestellt wird, eingegeben und an den derzeit verwendeten Adressserver übermittelt. Alternativ, insbesondere bei häufig wechselnden Adressservern, kann die dem Kommunikationsendgerät zugeordnete Adresse auch innerhalb der Abfragenachricht an den Adressserver übermittelt werden.

Ein Ausführungsbeispiel des erfindungsgemäßen Verfahrens wird nachfolgend anhand der Zeichnungen erläutert. Das Ausführungsbeispiel dient gleichzeitig der Erläuterung eines erfindungsgemäßen Adressservers und Kommunikationsendgerätes.

Dabei zeigen:
- Figur 1: in schematischer Darstellung eine Anordnung aus einem Datenverarbeitungsgerät, einem Kommunikationsserver, einem Adressserver, einer Firewall-Einrichtung und zwei Kommunikationsendgeräten, die über ein lokales Datennetzwerk verbunden sind, und
- Figur 2: in einer schematisch vereinfachten Darstellung die zwischen dem Datenverarbeitungsgerät, dem Adressserver und einem Kommunikationsendgerät ausgetauschten Meldungen.

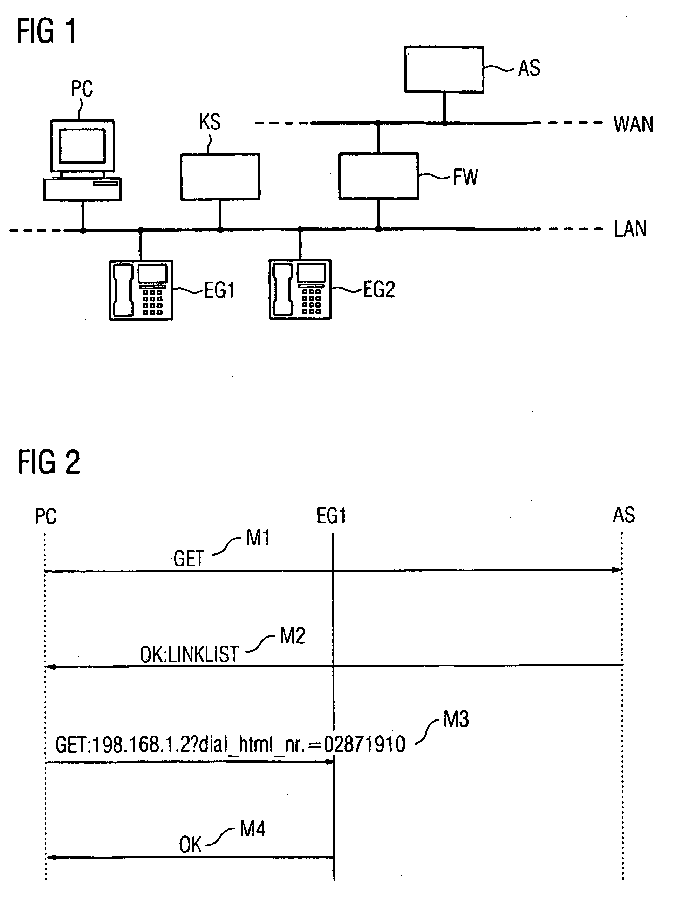

In der Figur 1 ist schematisch eine Kommunikationsanordnung dargestellt, bei der ein lokales Netzwerk LAN über einen Router FW, der mit einer NAT-Instanz und einer Firewall ausgerüstet ist, mit dem Internet WAN als Beispiel für ein öffentliches Kommunikationsnetzwerk verbunden ist. An dem lokalen Netzwerk LAN (hier: ein Intranet eines Unternehmens) sind ein Datenverarbeitungsgerät PC, ein Kommunikationsserver KS, die Kommunikationsendgeräte EG1, EG2 und der bereits erwähnte Router FW angeschlossen. Bei den Kömmunikationsendgeräten EG1, EG2 handelt es sich um Sprachdatenendgeräte, sog. VoIP-Telefone, die als Kommunikationsknoten den Kommunikationsserver KS (hier: ein SIP-Proxy-Server) verwenden.

Selbstverständlich können anstelle der genannten Geräte und Einrichtungen auch ähnliche Geräte und Einrichtungen verwendet werden; so kann beispielsweise anstelle des Datenverarbeitungsgerätes PC auch ein mobiler "PDA" (Personal Digital Assistant) verwendet werden, welcher über eine (nicht dargestellte) Funkeinrichtung ("WLAN-Router") mit dem Netzwerk LAN verbunden ist. Im vorliegenden Ausführungsbeispiel wird im Übrigen diejenige Variante behandelt, bei der CTI-Anweisungen (beispielsweise Wählbefehle) direkt an die Kommunikationsendgeräte EG1, EG2 übermittelt und dort ausgeführt werden. Alternativ können solche Befehle jedoch auch an den Kommunikationsserver KS gesendet werden, wobei dieser seinerseits die entsprechenden Funktionalitäten seitens der Kommunikationsendgeräte EG1, EG2 auslöst. Schließlich ist auch eine dritte Variante denkbar, wobei je nach gewünschter Funktionalität und je nach gewünschtem Befehl unterschieden wird, ob die entsprechende Anweisung an den Kommunikationsserver KS bzw. eine andere Netzknoteneinrichtung übermittelt wird, oder ob die gewünschte Funktionalität zu einer direkten Befehlsübermittlung an das betroffene Kommunikationsendgerät EG1, EG2 führt.

Im vorliegenden Ausführungsbeispiel wird die CTI-Funktionalität anhand eines Wählbefehls gezeigt. Dabei ist zu beachten, dass eine derartige "Wahlhilfe"-Applikation ein zwar wichtiges, bei Weitem jedoch nicht das einzige Anwendungsbeispiel für eine CTI-Funktionalität darstellt. Insbesondere ist es möglich, dass bei dem später gezeigten Ausführungsbeispiel der "Wahlhilfe" in einem zweiten Schritt eine Anruferliste aus einem Kommunikationsendgerät EG1, EG2 abgerufen wird, wobei diese Anruferliste in einem Browser-Fenster des Datenverarbeitungsgerätes PC dargestellt wird, und wobei aus dieser Anruferliste beispielsweise eine Anwahl des dort verzeichneten Kommunikationspartners stattfindet. In diesem Fall würde also eines der Kommunikationsendgeräte EG1, EG2 als Adressserver AS fungieren. Auch das Setzen von Überwachungsaufträgen (sog. "Monitoring-Punkte") im Kommunikationsserver KS und die Fern-Konfiguration von Einstellungen der Kommunikationsendgeräte EG1, EG2 können mit Hilfe des nachstehend beschriebenen Verfahrens ausgeführt werden.

Nachfolgend wird anhand der Figur 2 am Beispiel der "Wahlhilfe" der Meldungsaustausch zwischen dem Datenverarbeitungsgerät PC, dem Kommunikationsendgerät EG1 und dem Adressserver AS skizziert. Da bei diesem Vorgehen lediglich HTTP-Meldungen ausgetauscht werden, welche transparent über den Router FW weitergegeben werden, ist der Router FW aus Gründen der Anschaulichkeit in der Figur 2 nicht verzeichnet und wird auch nicht in dem Ausführungsbeispiel diskutiert.

Ein Benutzer, der das Datenverarbeitungsgerät PC und das Kommunikationsendgerät EG1 verwendet, sucht die ihm nicht bekannte Rufnummer eines gewünschten Gesprächpartners. Zu diesem Zweck startet er an seinem Datenverarbeitungsgerät PC eine Browser-Software (z.B. Microsoft Internet Explorer, Mozilla FireFox, Apple Safari o. ä.) und besucht damit die Web-Site einer Suchmaschine bzw. eines Anbieters für Kommunikationsdaten. Alternativ kann auch ein lokaler Directory, der mit einer entsprechenden Web-Oberfläche ausgestattet ist, verwendet werden. Sofern es sich um den ersten Besuch dieser Web-Site handelt, wird der Benutzer aufgefordert, als seine Adresse die IP-Adresse des ihm zugeordneten Kommunikationsendgerätes EG1 einzugeben. Je nach Konfiguration kann selbstverständlich anstelle der IP-Adresse auch eine URL, URI, Rufnummer etc. eingegeben werden; bei dem o. g. alternativen Ausführungsbeispiel würde an dieser Stelle die entsprechende Adresse des Kommunikationsservers KS abgefragt. Die von dem Benutzer eingegebene Adresse wird nun an den Adressserver AS gesendet, auf dem auch die besuchte Web-Site "gehostet" ist. Die Adresse wird in dem Adressserver AS dem Benutzer bzw. dessen Datenverarbeitungsgerät PC zugeordnet gespeichert. Alternativ kann die Adresse aber auch in einem sog. "Cookie" des Datenverarbeitungsgerätes PC oder auch anderweitig gespeichert werden; wichtig ist, dass der Adressserver AS bzw. die für die Aufbereitung der Web-Site genutzte Software auf diese Informationen später zugreifen kann.

Bei wiederkehrender Verwendung derselben Web-Site durch den Benutzer bzw. dessen Datenverarbeitungsgerät PC entfällt die beschriebene Eingabe der Adresse, sofern diese Information aus einer vorhergehenden Sitzung übernommen werden kann.

Der Benutzer gibt nun in eine Eingabemaske der Web-Site einen oder mehrere Suchbegriffe ein, die zum Auffinden des gewünschten Kommunikationspartners bzw. dessen Kommunikationsadresse (Rufnummer) führen sollen. Diese Suchbegriffe werden in einer ersten Meldung M1 mittels eines sog. "GET-Befehls" zu dem Adressserver AS übermittelt. Anstelle der HTTP-GET-Methode kann jedoch auch alternativ die HTTP-POST-Methode verwendet werden. Sofern die mit der Meldung M1 übermittelten Daten hinreichend waren, um eine sinnvolle Anzahl von "Treffern" zu erhalten, wird aus den Namen und ggf. weiteren Angaben der aufgefundenen potentiellen Kommunikationspartner seitens des Adressservers AS eine Tabelle mit Hyper-Links, eine sog. "Link-List" (kurz: Links), erzeugt und mittels einer sog. "Acknowledgement"-Nachricht, nämlich der Meldung M2, an das Datenverarbeitungsgerät PC übertragen und in einem Fenster der dort ablaufenden Browser-Software dargestellt. Dabei sind die Namen der aufgefundenen potentiellen Kommunikationspartner als eben jene gesagten "Hyper-Links" ausgeführt, die mit einer Netzwerkadresse des von dem Benutzer verwendeten Kommunikationsendgerätes EG1 verknüpft sind. Im Ausführungsbeispiel ist diese Adresse die IP-Adresse "198.168.1.2". Diese Adresse wurde für den Hyper-Link weiterhin um einen Befehl ergänzt, der angibt, welche Aktion das zu steuernde Kommunikationsendgerät EG1 ausführen soll; im Fall der "Wahlhilfe" ist dies eine Wählbefehl, hier: "dial_html_nr.=". Weiterhin ist der jeweilige Hyper-Link neben dem Wählbefehl noch als Befehlsargument mit der Rufnummer des potentiellen Kommunikationspartners versehen, dessen Klarname als "Link" dargestellt wird. Diese Rufnummer lautet im Ausführungsbeispiel "02871910". Entscheidet sich nun der Benutzer dafür, einen der durch die Links ausgewiesenen potentiellen Kommunikationspartner anzurufen, "klickt" er auf den entsprechenden Link, wodurch von dem Datenverarbeitungsgerät PC zu dem Endgerät EG1 eine Meldung M3 mit einem "GET-Befehl" versendet wird, der an die IP-Adresse des Kommunikationsendgerätes EG1 gerichtet ist und welcher als Befehlsargument den Wählbefehl und die Zielrufnummer umfasst. Das Kommunikationsendgerät EG1 wertet den derart erhaltenen Befehl aus, führt eine Plausibilitätskontrolle und ggf. auch eine Berechtigungskontrolle durch, antwortet mit einer Bestätigungsmeldung M4 über das Netzwerk LAN an das Datenverarbeitungsgerät PC und führt anschließend die Anwahl des gewünschten Kommunikationspartners durch.

Vorliegend wurde beschrieben, wie ein Benutzer zumindest bei einer erstmaligen Benutzung der Web-Site eine Adresse seines zugeordneten Kommunikationsendgerätes EG1, EG2 bzw. des Kommunikationsservers KS zur Verfügung stellt. Alternativ können sich aber auch Kommunikationsendgeräte EG1, EG2 selbsttätig bei verschiedenen Web-Sites mit ihren Adressen anmelden, insbesondere dann, wenn in den Kommunikationsendgeräten EG1, EG2 die Netzwerkadresse oder ein ähnliches Identifizierungsmerkmal bzw. Adresse eines zugeordneten Datenverarbeitungsgerätes PC vorliegen, so dass seitens der verwendeten Adressserver AS jeweils die Verknüpfung zwischen einzelnen Kommunikationsendgeräten EG1, EG2 und zugeordneten Datenverarbeitungsgeräten PC vorgenommen werden kann.

Anstelle der hier beschriebenen direkten Links zur lokal gültigen Adresse (IP-Adresse) der Kommunikationsendgeräte EG1, EG2 bzw. des Kommunikationsservers KS können auch Links zum Adressserver AS verwendet werden, die dann mit einer HTTP-Funktion "301 Moved Permanently" oder "307 Temporary Redirect" beantwortet werden. Diese Antwortmeldungen würden dann wiederum die lokal gültige Adresse des Kommunikationsendgerätes EG1, EG2 enthalten, zu der der verwendete Browser des Datenverarbeitungsgerätes PC seine "GET" bzw. "POST"-Meldung dann erneut versenden würde.

## Patentansprüche

1. Verfahren zur Steuerung eines Kommunikationsendgerätes (EG1, EG2) mittels eines Datenverarbeitungsgerätes (PC),
wobei ein Befehl von dem Datenverarbeitungsgerät (PC) zu dem Kommunikationsendgerät (EG1, EG2) oder zu einem dem Kommunikationsendgerät (EG1, EG2) zugeordneten Kommunikationsserver (KS) übermittelt wird, wobei
- in einem ersten Schritt entweder
· an dem Datenverarbeitungsgerät (PC) eine dem Kommunikationsendgerät (EG1, EG2) zugeordnete Adresse eingegeben wird und diese zugeordnete Adresse an einen Adressserver (AS) übermittelt wird oder alternativ
· die dem Kommunikationsendgerät (EG1, EG2) zugeordnete Adresse von diesem Kommunikationsendgerät (EG1, EG2) an den Adressserver (AS) übermittelt wird,
wobei die Adresse dem Datenverarbeitungsgerät (PC) oder dessen Nutzer zugeordnet im Adressserver (AS) oder anderweitig für den Adressserver (AS) zugänglich gespeichert wird,
- in einem zweiten Schritt eine Abfragenachricht von dem Datenverarbeitungsgerät (PC) an den Adressserver (AS) übermittelt wird,
wobei die Übermittlung der dem Kommunikationsendgerät (EG1, EG2) zugeordnete Adresse an den Adressscrver (AS) aus dem ersten Schritt bei Eingabe der Adresse an dem Datenverarbeitungsgerät (PC) spätestens mit diesem zweiten Schritt erfolgt,
- in einem dritten Schritt von dem Adressserver (AS) als Antwortnachricht auf die Abfragenachricht zumindest ein Link an das Datenverarbeitungsgerät (PC) übermittelt wird, wobei der zumindest eine Link als Zieladresse die dem Kommunikationsendgerät (EG1, EG2) zugeordnete Adresse umfasst, und wobei der Link einen Befehlsteil umfasst,
- in einem vierten Schritt durch eine Aktivierung des Links zumindest der Befehlsteil an die dem Kommunikationsendgerät (EG1, EG2) zugeordnete Adresse versendet wird,
und
- in einem fünften Schritt der Befehlsteil von dem Kommunikationsendgerät (EG1, EG2) oder dem dem Kommunikationsendgerät (EG1, EG2) zugeordneten Kommunikationsserver (KS) ausgewertet und zur Steuerung des Kommunikationsendgerätes (EG1, EG2) verwendet wird.

2. Verfahren nach Patentanspruch 1,
**dadurch gekennzeichnet, dass**
als das Kommunikationsendgerät (EG1, EG2) ein VoIP-Endgerät verwendet wird.

3. Verfahren nach einem der vorhergehenden Patentansprüche,
**dadurch gekennzeichnet, dass**
als das Datenverarbeitungsgerät (PC) ein Personal-Computer, ein PDA oder ein mobiler Computer verwendet wird.

4. Verfahren nach einem der vorhergehenden Patentansprüche,
**dadurch gekennzeichnet, dass**
als die dem Kommunikationsendgerät (EG1, EG2) zugeordnete Adresse eine Netzwerkadresse des Kommunikationsendgerätes (EG1, EG2) verwendet wird.

5. Verfahren nach einem der vorhergehenden Patentansprüche,
**dadurch gekennzeichnet, dass**
als die dem Kommunikationsendgerät (EG1, EG2) zugeordnete Adresse eine Netzwerkadresse des Kommunikationsservers (KS), an dem das Kommunikationsendgerät (EG1, EG2) angemeldet ist, verwendet wird,
wobei die zugeordnete Adresse weiterhin ein Identifizierungsmerkmal für das Kommunikationsendgerät (EG1, EG2) umfasst.

6. Verfahren nach einem der vorhergehenden Patentansprüche,
**dadurch gekennzeichnet, dass**
zur Anzeige und Verarbeitung des Links eine auf dem Datenverarbeitungsgerät (PC) ablaufende Browser-Software verwendet wird.

7. Verfahren nach einem der vorhergehenden Patentansprüche,
**dadurch gekennzeichnet, dass**
für den Befehlsteil ein Wählbefehl und eine Rufnummer eines zu rufenden Kommunikationspartners verwendet wird.

8. Verfahren nach einem der vorhergehenden Patentansprüche,
**dadurch gekennzeichnet, dass**
für die Übermittlung der Abfragenachricht und für die Übermittlung der Antwortnachricht jeweils das HTTP-Protokoll verwendet wird.

9. Verfahren nach einem der vorhergehenden Patentansprüche,
**dadurch gekennzeichnet, dass**
als die dem Kommunikationsendgerät (EG1, EG2) zugeordnete Adresse eine lokal gültige Netzwerkadresse des Kommunikationsendgerätes (EG1, EG2) verwendet wird.

10. Verfahren nach einem der Patentansprüche 1 bis 9,
**dadurch gekennzeichnet, dass**
als die dem Kommunikationsendgerät (EG1, EG2) zugeordnete Adresse eine global gültige IP-Adresse des Kommunikationsendgerätes (EG1, EG2) verwendet wird.

11. Verfahren nach einem der vorhergehenden Patentansprüche,
**dadurch gekennzeichnet, dass**
die dem Kommunikationsendgerät (EG1, EG2) zugeordnete Adresse vor dem zweiten Schritt separat zu dem Adressserver (AS) übermittelt wird.

12. Verfahren nach Patentanspruch 11,
**dadurch gekennzeichnet, dass**
die Übermittlung der dem Kommunikationsendgerät (EG1, EG2) zugeordneten Adresse an den Adressserver (AS) einmalig zu Beginn einer Sitzung an dem Datenverarbeitungsgerät (PC) vorgenommen wird.

13. Adressserver (AS) für eine Kommunikationsanordnung mit einem Datenverarbeitungsgerät (PC),
**dadurch gekennzeichnet, dass**
der Adressserver (AS) eine Web-Server-Applikation umfasst, welche zur Durchführung eines der vorgenannten Verfahren eingerichtet ist.

14. Adressserver (AS) nach Patentanspruch 13,
dadurch gekennzeichet, dass
der Adressserver (AS) zur Bereitstellung einer Benutzeroberfläche als eine Web-Site auf dem Datenverarbeitungsgerät (PC) mittels einer dort befindlichen Browser-Software eingerichtet ist.

15. Adressservcr (AS) nach Patentanspruch 14,
**dadurch gekennzeichnet, dass**
die auf dem Datenverarbeitungsgerät (PC) angezeigte Web-Site eine Eingabemöglichkeit für die dem Kommunikationsendgerät (EG1, EG2) zugeordnete Adresse vorsieht.

16. Kommunikationsanordnung zur Steuerung eines Kommunikationsendgerätes (EG1, EG2) mittels eines Datenvcrarbeitungsgcrätes (PC), wobei die Kommunikationsanordnung das Datenverarbeitungsgerät (PC), das Kommunikationsendgerät (EG1, EG2) und einen Adressserver (AS) nach einem der Ansprüche 13 - 15 umfasst.

## Claims

1. Method for controlling a communication terminal (EG1, EG2) by means of a data processing device (PC), wherein a command is transmitted from the data processing device (PC) to the communication terminal (EG1, EG2) or to a communication server (KS) associated with the communication terminal (EG1, EG2), wherein
- in a first step
• either an address associated with the communication terminal (EG1, EG2) is input to the data processing device (PC) and this associated address is transmitted to an address server (AS) or alternatively
• the address associated with the communication terminal (EG1, EG2) is transmitted from this communication terminal (EG1, EG2) to the address server (AS),
wherein the address is stored in the address server (AS) in a manner associated with the data processing device (PC) or the user of the latter or is otherwise stored in a manner accessible to the address server (AS),
- in a second step, a query message is transmitted from the data processing device (PC) to the address server (AS),
wherein the transmission of the address associated with the communication terminal (EG1, EG2) to the address server (AS) from the first step is carried out at the latest with this second step upon inputting the address to the data processing device (PC),
- in a third step, the address server (AS) transmits at least one link to the data processing device (PC) as a response message to the query message, wherein the at least one link comprises, as the destination address, the address associated with the communication terminal (EG1, EG2), and wherein the link comprises a command part,
- in a fourth step, at least the command part is transmitted to the address associated with the communication terminal (EG1, EG2) by activating the link, and
- in a fifth step, the command part is evaluated by the communication terminal (EG1, EG2) or the communication server (KS) associated with the communication terminal (EG1, EG2) and is used to control the communication terminal (EG1, EG2).

2. Method according to Patent Claim 1,
**characterized in that**
a VoIP terminal is used as the communication terminal (EG1, EG2).

3. Method according to one of the preceding patent claims,
**characterized in that**
a personal computer, a PDA or a mobile computer is used as the data processing device (PC).

4. Method according to one of the preceding patent claims,
**characterized in that**
a network address of the communication terminal (EG1, EG2) is used as the address associated with the communication terminal (EG1, EG2).

5. Method according to one of the preceding patent claims,
**characterized in that**
a network address of the communication server (KS), on which the communication terminal (EG1, EG2) is registered, is used as the address associated with the communication terminal (EG1, EG2),
wherein the associated address also comprises an identification feature for the communication terminal (EG1, EG2).

6. Method according to one of the preceding patent claims,
**characterized in that**
browser software running on the data processing device (PC) is used to display and process the link.

7. Method according to one of the preceding patent claims,
**characterized in that**
a dialling command and a telephone number of a communication partner to be called are used for the command part.

8. Method according to one of the preceding patent claims,
**characterized in that**
the HTTP protocol is respectively used to transmit the query message and to transmit the response message.

9. Method according to one of the preceding patent claims,
**characterized in that**
a locally valid network address of the communication terminal (EG1, EG2) is used as the address associated with the communication terminal (EG1, EG2).

10. Method according to one of Patent Claims 1 to 9, **characterized in that**
a globally valid IP address of the communication terminal (EG1, EG2) is used as the address associated with the communication terminal (EG1, EG2).

11. Method according to one of the preceding patent claims,
**characterized in that**
the address associated with the communication terminal (EG1, EG2) is transmitted separately to the address server (AS) before the second step.

12. Method according to Patent Claim 11,
**characterized in that**
the address associated with the communication terminal (EG1, EG2) is transmitted to the address server (AS) once at the beginning of a session on the data processing device (PC).

13. Address server (AS) for a communication arrangement having a data processing device (PC),
**characterized in that**
the address server (AS) comprises a web server application which is set up to carry out one of the abovementioned methods.

14. Address server (AS) according to Patent Claim 13, **characterized in that**
the address server (AS) is set up to provide a user interface as a website on the data processing device (PC) using browser software located there.

15. Address server (AS) according to Patent Claim 14, **characterized in that**
the website displayed on the data processing device (PC) provides a possibility for inputting the address associated with the communication terminal (EG1, EG2).

16. Communication arrangement for controlling a communication terminal (EG1, EG2) by means of a data processing device (PC), wherein the communication arrangement comprises the data processing device (PC), the communication terminal (EG1, EG2) and an address server (AS) according to one of Claims 13-15.

## Revendications

1. Procédé pour commander un terminal de communication (EG1, EG2) à l'aide d'un appareil de traitement de données (PC),
dans lequel une instruction de l'appareil de traitement de données (PC) est transmise au terminal de communication (EG1, EG2) ou à un serveur de communication (KS) associé au terminal de communication (EG1, EG2), dans lequel
- dans une première étape soit,
■ une adresse associée au terminal de communication (EG1, EG2) est entrée dans l'appareil de traitement de données (PC), et cette adresse associée est transmise à un serveur d'adresses (AS), ou alternativement
■ l'adresse associée au terminal de communication (EG1, EG2) est transmise depuis ce terminal de communication (EG1, EG2) au serveur d'adresses (AS),
l'adresse associée à l'appareil de traitement de données (PC) ou à son l'utilisateur étant stockée dans le serveur d'adresses (AS) ou ailleurs de manière accessible pour le serveur d'adresses (AS),
- dans une deuxième étape, un message d'interrogation est transmis par l'appareil de traitement de données (PC) au serveur d'adresses (AS),
la transmission de l'adresse associée au terminal de communication (EG1, EG2) au serveur d'adresses (AS) de la première étape ayant lieu lors de l'entrée de l'adresse dans l'appareil de traitement de données (PC) au plus tard à l'occasion de cette deuxième étape,
- dans une troisième étape, au moins un lien est transmis à l'appareil de traitement de données (PC) comme message de réponse au message d'interrogation par le serveur d'adresses (AS), cet au moins un lien comprenant, comme adresse cible, l'adresse associée au terminal de communication (EG1, EG2), et le lien comprenant une partie d'instruction,
- dans une quatrième étape, par une activation du lien, au moins la partie d'instruction est envoyée à l'adresse associée au terminal de communication (EG1, EG2), et
- dans une cinquième étape, la partie d'instruction est évaluée par le terminal de communication (EG1, EG2) ou le serveur de communication (KS) associé au terminal de communication (EG1, EG2) et est utilisée pour commander le terminal de communication (EG1, EG2).

2. Procédé selon la revendication 1, **caractérisé en ce qu'**un terminal VoIP est utilisé en tant que le terminal de communication (EG1, EG2).

3. Procédé selon l'une des revendications précédentes, **caractérisé en ce qu'**un micro-ordinateur personnel, un PDA ou un ordinateur portable est utilisé en tant que l'appareil de traitement de données (PC).

4. Procédé selon l'une des revendications précédentes, **caractérisé en ce qu'**une adresse réseau du terminal de communication (EG1, EG2) est utilisée en tant que l'adresse associée au terminal de communication (EG1, EG2).

5. Procédé selon l'une des revendications précédentes, **caractérisé en ce qu'**une adresse réseau du serveur de communication (KS), auquel le terminal de communication (EG1, EG2) est enregistré, est utilisée en tant qu'adresse associée au terminal de communication (EG1, EG2), l'adresse associée contenant une caractéristique d'identification pour le terminal de communication (EG1, EG2).

6. Procédé selon l'une des revendications précédentes, **caractérisé en ce qu'**un logiciel de navigation tournant sur l'appareil de traitement de données (PC) est utilisé pour l'affichage et le traitement du lien.

7. Procédé selon l'une des revendications précédentes, **caractérisé en ce qu'**une instruction de numérotation et un numéro d'appel d'un partenaire de communication à appeler sont utilisés pour la partie d'instruction.

8. Procédé selon l'une des revendications précédentes, **caractérisé en ce que** le protocole HTTP est utilisé respectivement pour la transmission du message d'interrogation et pour la transmission du message de réponse.

9. Procédé selon l'une des revendications précédentes, **caractérisé en ce qu'** une adresse réseau valable localement du terminal de communication (EG1, EG2) est utilisée en tant que l'adresse associée au terminal de communication (EG1, EG2).

10. Procédé selon l'une des revendications 1 à 9, **caractérisé en ce qu'**une adresse IP valable globalement du terminal de communication (EG1, EG2) est utilisée en tant que l'adresse associée au terminal de communication (EG1, EG2).

11. Procédé selon l'une des revendications précédentes, **caractérisé en ce que** l'adresse associée au terminal de communication (EG1, EG2) est transmise séparément au serveur d'adresses (AS) avant la deuxième étape.

12. Procédé selon la revendication 11, **caractérisé en ce que** la transmission au serveur d'adresses (AS) de l'adresse associée au terminal de communication (EG1, EG2) est effectuée une seule fois au début d'une session au niveau de l'appareil de traitement de données (PC).

13. Serveur d'adresses (AS) pour un dispositif de communication avec un appareil de traitement de données (PC), **caractérisé en ce que** le serveur d'adresses (AS) contient une application de serveur web, laquelle est conçue pour l'exécution de l'un des procédés précédemment.

14. Serveur d'adresses (AS) selon la revendication 13, **caractérisé en ce que** le serveur d'adresses (AS) est conçu pour la mise à disposition d'une interface utilisateur en tant que site web sur l'appareil de traitement de données (PC) à l'aide d'un logiciel de navigation qui s'y trouve.

15. Serveur d'adresses (AS) selon la revendication 14, **caractérisé en ce que** le site web affiché sur l'appareil de traitement de données (PC) prévoit une possibilité de saisie pour l'adresse associée au terminal de communication (EG1, EG2).

16. Dispositif de communication pour la commande d'un terminal de communication (EG1, EG2) à l'aide d'un appareil de traitement de données (PC), le dispositif de communication contenant l'appareil de traitement de données (PC), le terminal de communication (EG1, EG2) et un serveur d'adresses (AS) selon l'une des revendications 13-15.
